# EUROPÄISCHE PATENTSCHRIFT

(11) **EP 1 867 569 B1**
(45) Veröffentlichungstag und Bekanntmachung des Hinweises auf die Patenterteilung: **21.01.2009**
(21) Anmeldenummer: 07006138.7
(22) Anmeldetag: 26.03.2007
(51) Int. Cl.: B64F 1/305, B64F 1/315

(54) **Fluggastbrücke oder Fluggasttreppe**
Air passenger boarding bridge or stairs
Passerelle

(30) Priorität: 14.06.2006 DE 102006027568; 22.11.2006 DE 102006054910
(43) Veröffentlichungstag der Anmeldung: 19.12.2007
(73) Patentinhaber: Hübner GmbH, 34123 Kassel (DE)
(72) Erfinder: Müller, Michael, 34302 Guxhagen-Wollrode (DE); Karasek, Jens, 34260 Kaufungen (DE)
(74) Vertreter: Walther, Walther & Hinz GbR

(56) Entgegenhaltungen:
- EP-A- 0 277 648
- DE-A1- 3 023 885
- DE-A1- 3 306 109

## Beschreibung

Die vorliegende Erfindung betrifft eine Fluggastbrücke oder eine Fluggasttreppe mit einem Übergangsboden, wobei die Fluggastbrücke oder die Fluggasttreppe einen den Übergangsboden überspannenden Balg, insbesondere einen U-förmigen Balg aufweist.

Fluggasttreppen oder Fluggastbrücken sind z. B. aus der DE 30 23 885 A1, der EP 0 277 648 A1 und der DE 33 06 109 C2 hinreichend bekannt. Diese Fluggasttreppen oder Fluggastbrücken dienen dem Zugang zum Flugzeug. Derartige Fluggasttreppen oder Fluggastbrücken besitzen einen spreizbaren Balg, der den Zwischenraum zwischen der Fluggasttreppe oder der Fluggastbrücke zum Flugzeug überbrückt, um so die das Flugzeug besteigenden Personen vor Witterungseinflüssen zu schützen. Der Balg ist im Wesentlichen U-förmig ausgebildet, wobei der Balg unten durch einen Übergangsboden abgeschlossen ist. Der Balg weist an seiner Stirnseite einen flexiblen Rahmen mit einem Stoßpuffer aus elastisch nachgiebigem Material auf, wobei der Balg mit diesem Stoßpuffer auf der Außenhaut des Flugzeugs anliegt. Die Flexibilität des Rahmens ist insofern erforderlich, als durch den Rahmen gewährleistet sein muss, dass sich die Fluggastbrücke oder die Fluggasttreppe tatsächlich an den Flugzeugrumpf anschmiegt. Ein starrer Rahmen wäre hierzu nicht in der Lage. Durch den Stoßpuffer soll verhindert werden, dass beim Anlegen des flexiblen Rahmens an die Außenhaut des Flugzeugs diese beschädigt wird.

Derartige Fluggasttreppen oder Fluggastbrücken sollen den Zugang zu den unterschiedlichsten Flugzeugtypen gewährleisten. Das heißt, mit einer solchen Fluggasttreppe oder Fluggastbrücke soll der Zugang beispielsweise zu einer kleinen Maschine ebenso gewährleistet sein wie zum Airbus A380. Der Airbus A380 besitzt obere Zugangstüren, die sich bis in das Dach des Flugzeugrumpfes hinein erstrecken. Das bedeutet, dass der Balg einer solchen Fluggastbrücke oder einer solchen Fluggasttreppe eine extrem große Erstreckung in seiner Höhe aufweisen muss, da bedingt durch die Außenkontur der Türöffnung die komplette Türöffnung nur mit einem solchen sehr hohen Balg vollständig erfassbar ist.

Andererseits gibt es - wie bereits zuvor erläutert - Flugzeuge, deren Zugangstür sich im Wesentlichen lediglich über den vertikalen Teil des Flugzeugrumpfes erstreckt. Hier ist eine große vertikale Erstreckung hinderlich, da der Stoßpuffer sich gegebenenfalls über den Zenit des Flugzeugs erstrecken würde. Dies mit der Folge, dass der Stoßpuffer im oberen Bereich nicht vollflächig anliegen würde und insofern die Gefahr besteht, dass Wasser durchtritt. Darüber hinaus besteht die Gefahr, dass bei Flugzeugen mit kleinem Rumpfdurchmesser Dachaufbauten wie Antennen, Sensoren etc. beschädigt würden. Außerdem würde gegebenenfalls der Arm, der den Balg auslenkt, in unmittelbaren Kontakt mit dem Flugzeugrumpf gelangen.

Um nun solche Fluggastbrücken oder Fluggasttreppen, die in der Anschaffung relativ teuer sind, in weiten Bereichen, also sowohl bei kleinen als auch bei großen Flugzeugen, einsetzen zu können, wird erfindungsgemäß vorgeschlagen, dass die lichte Höhe zwischen der Oberkante des Übergangsbodens und dem Dach des Balges veränderbar ist. Soll somit eine solche Fluggastbrücke oder Fluggasttreppe an dem oberen Zustieg eines A380 eingesetzt werden, so ist eine große Öffnungsweite erforderlich. In diesem Fall ist die lichte Höhe zwischen der Oberkante des Übergangsbodens und dem Dach des Balges sehr groß zu wählen, wohingegen dann, wenn die Brücke den Zugang zu einem kleinen Flugzeug ermöglichen soll, bei dem die Türöffnung sich im Wesentlichen im vertikalen Bereich des Flugzeugrumpfes befindet und der Balg über die Türkontur nicht wesentlich überstehen soll, lediglich eine geringe lichte Höhe des Balges erforderlich ist. Hieraus wird deutlich, dass eine Fluggastbrücke oder Fluggasttreppe, bei der die lichte Höhe zwischen der Oberkante des Übergangsbodens und dem Dach des Balges veränderlich ist, wesentlich vielseitiger einsetzbar ist.

Im Einzelnen ist vorgesehen, dass die Fluggasttreppe oder Fluggastbrücke eine Rahmenvorrichtung aufweist, die den Balg relativ zum Übergangsboden in der Höhe verstellbar aufnimmt. Das heißt, dass der Übergangsboden fest bleibt, sich lediglich der Balg relativ zum Übergangsboden in vertikaler Richtung bewegt und so die lichte Öffnungsweite vergrößert oder verkleinert wird. Im Einzelnen ist in diesem Zusammenhang vorgesehen, dass die Rahmenvorrichtung zwei relativ zueinander bewegliche Rahmenteile aufweist, wobei die beiden Rahmenteile durch Längsführungen, z. B. durch Rollonführungen®, miteinander in Verbindung stehen. Hieraus wird deutlich, dass das Rahmenteil, das sich an der Fluggastbrücke oder an der Fluggasttreppe befindet, dort fest angeordnet ist, wohingegen das andere bewegliche Rahmenteil, das den Balg aufnimmt, in der Höhe verfahrbar ist und so die erforderliche Veränderbarkeit in der lichten Höhe des Durchgangs bereitstellt. In diesem Zusammenhang ist vorgesehen, dass das eine Rahmenteil relativ zu dem anderen Rahmenteil durch einen motorischen Antrieb, z. B. einen Spindelantrieb, verfahrbar ist. Hierbei ist der Spindelantrieb insbesondere an den beiden Längsseiten der Fluggasttreppe oder der Fluggastbrücke angeordnet.

Um zu verhindern, dass Feuchtigkeit zwischen die beiden relativ zueinander beweglichen Rahmenteile der Rahmenvorrichtung eintritt, sind die beiden Rahmenteile an den oberen horizontalen Streben durch ein den Spalt zwischen den beiden Rahmenteilen abdeckendes Deckentuch überspannt. Die Länge des Deckentuches entspricht dem maximalen Verfahrweg der Rahmenteile relativ zueinander in vertikaler Richtung.

Denkbar ist ebenfalls, dass der Übergangsboden in der Höhe verstellbar ist. In diesem Fall ist vorgesehen, dass der U-förmige Balg durch einen Kuppelrahmen mit der Fluggastbrücke oder der Fluggasttreppe verbunden ist. Der Übergangsboden ist hierbei durch einen am Kuppelrahmen angeordneten motorischen Antrieb, z. B. einen Spindel- oder Kolben-Zylinderantrieb, in der Höhe verfahrbar. Wenn nun der Übergangsboden relativ zu dem Boden der Fluggastbrücke in der Höhe verstellbar ist, bildet sich zwangsweise zwischen dem Übergangsboden einerseits und dem Boden der Fluggasttreppe oder der Fluggastbrücke andererseits ein Absatz, der durch ein Überbrückungsglied ausgeglichen werden kann. Ein solches Überbrückungsglied bildet über dem Absatz eine Schräge, damit zum Beispiel auch Rollstuhlfahrer diesen Absatz überwinden können.

Anhand der Zeichnungen wird die Erfindung nachstehend beispielhaft näher erläutert.
- Fig. 1a und 1b: zeigen schematisch die Problematik der Anlage des Balges mit Stoßpuffer an einem Flugzeug mit einem im Durchmesser großen Rumpf (Fig. 1a) und an einem Flugzeug mit einem im Durchmesser kleineren Rumpf (Fig. 1b);
- Fig. 2: zeigt schematisch den vorderen Teil einer Fluggasttreppe oder Fluggastbrücke in perspektivischer Darstellung;

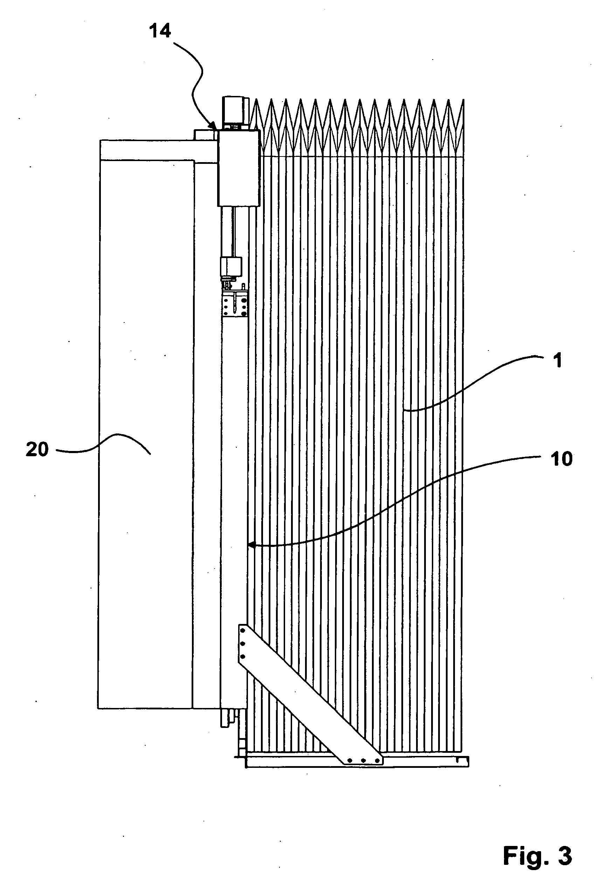

- Fig. 3: zeigt eine Seitenansicht gemäß Fig. 2;

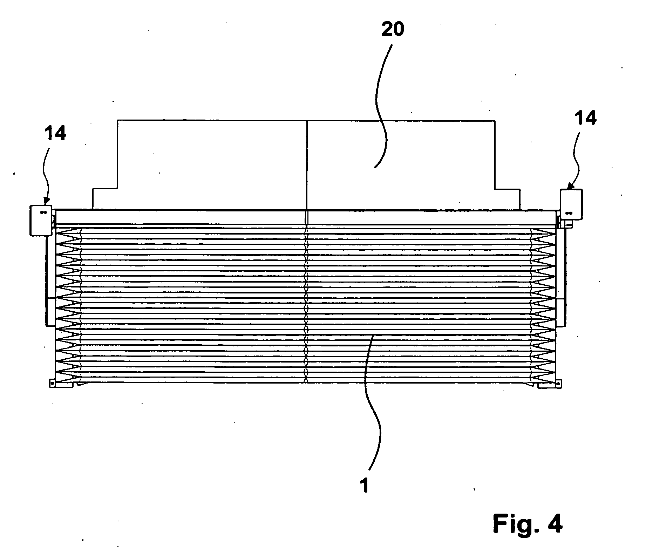

- Fig. 4: zeigt eine Ansicht gemäß Fig. 2;
- Fig. 5: zeigt die Rahmenvorrichtung in einer Frontansicht;
- Fig. 6: zeigt den Balg der Fluggasttreppe oder Fluggastbrücke in eingefahrener Position in einer Seitenansicht in vergrößerter Darstellung, wobei der Antrieb der besseren Übersichtlichkeit wegen weggelassen ist gemäß dem Schnitt A-A aus Fig. 5;
- Fig. 7: zeigt eine Darstellung gemäß Fig. 5, bei der der Balg nach oben ausgefahren ist, also eine obere Endlage eingenommen hat, gemäß dem Schnitt A-A aus Fig. 5;
- Fig. 8: zeigt die beiden Rahmenteile der Fluggasttreppe oder Fluggastbrücke in explosionsartiger Darstellung, wobei der Übersichtlichkeit wegen der Balg und auch der stirnseitige Ansatz der Treppe bzw. Brücke weggelassen ist;
- Fig. 9: zeigt schematisch den oberen Bereich des Balges mit den Armen zur Verstellung des Balges;
- Fig. 10: zeigt eine Ausführungsform einer Fluggastbrücke mit verschwenkbarem Übergangsboden;
- Fig. 11a: zeigt eine Fluggastbrücke mit einem höhenverstellbaren Übergangsboden in unterer Lage;
- Fig. 11b: zeigt eine Darstellung gemäß Fig. 11a, wobei der Übergangsboden sich in oberer Stellung befindet;
- Fig. 11c: zeigt einen Schnitt gemäß der Linie Xlb/Xlb aus Fig. 11 b.

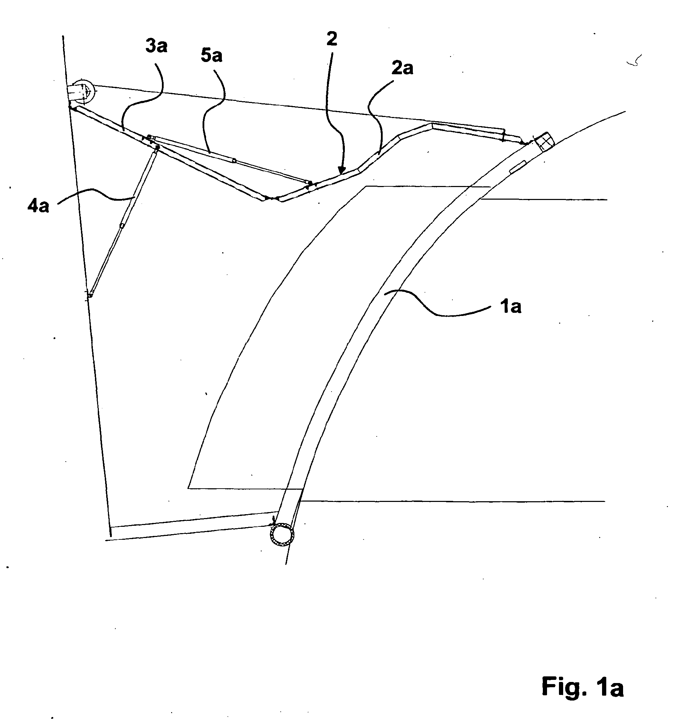

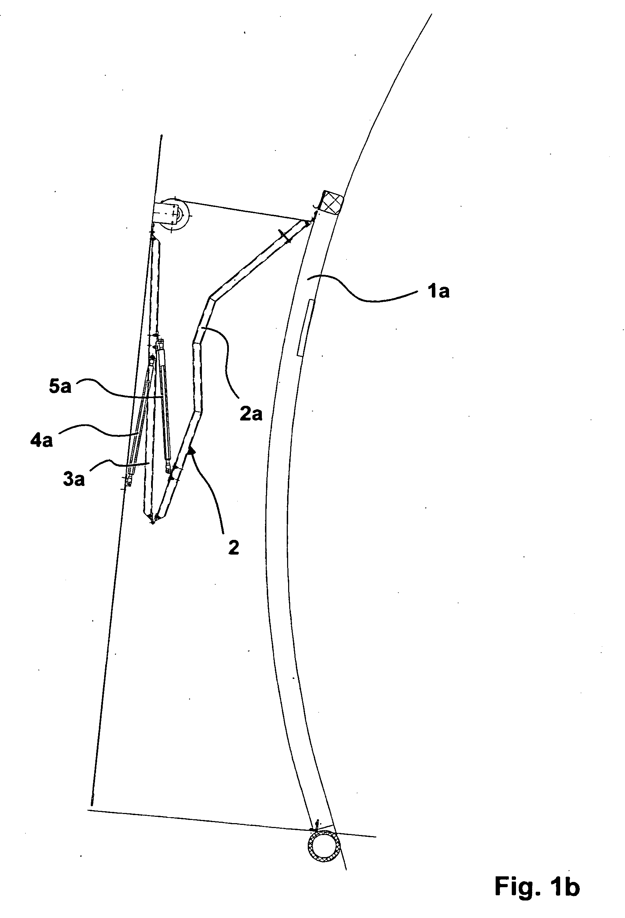

Fig. 1 a und 1 b zeigen schematisch die Anlage des Balges mit seinem stirnseitig angeordneten Stoßpuffer an einem Flugzeugrumpf mit großem Durchmesser, wobei die Türöffnung sich weit im Dach befindet (Fig. 1 a) sowie die Anlage des Balges mit dem Stoßpuffer an einem Flugzeug mit im Durchmesser kleinerem Flugzeugrumpf, wobei die Türöffnung sich im vertikalen Bereich des Flugzeugrumpfes befindet. Es ist unmittelbar erkennbar, dass bei Anlage des Faltenbalges mit dem stirnseitig angeordneten Stoßpuffer an einem Flugzeugrumpf mit großem Durchmesser die Erstreckung des Balges in der Höhe größer sein muss als bei Anlage des Balges an einem Flugzeugrumpf mit kleinerem Durchmesser. Würde ein Balg mit einer großen lichten Öffnungsweite im Bereich des Stoßpuffers an einen kleinen Flugzeugrumpf angelegt werden, so bestünde die Gefahr, dass der Stoßpuffer über den Zenit des Flugzeugrumpfes hinausragt mit allen Folgen, die bereits zuvor beschrieben wurden.

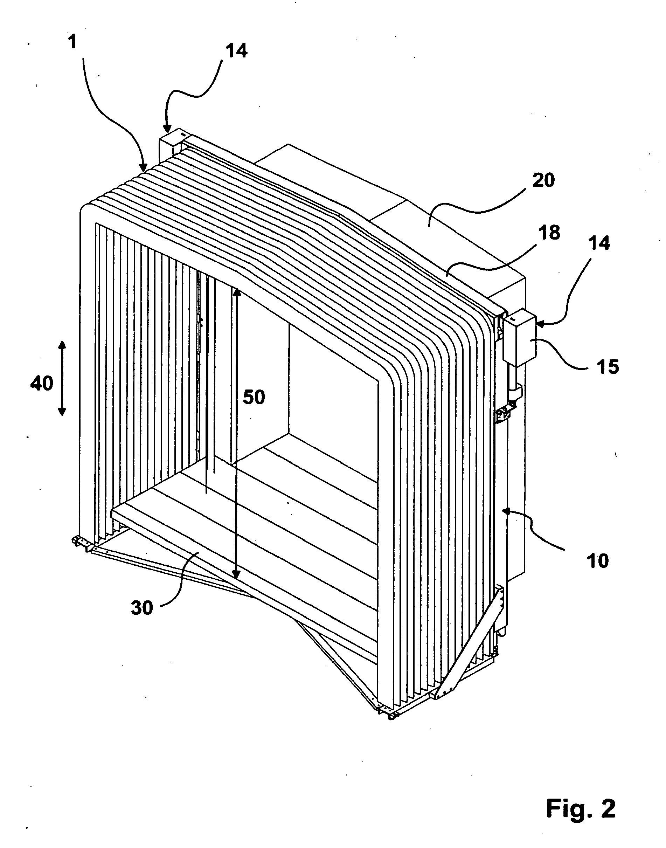

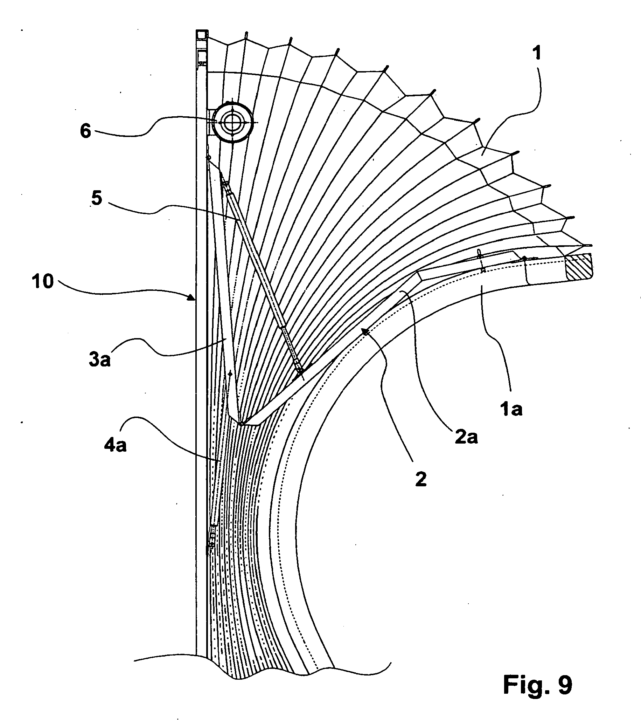

Aus der perspektivischen Darstellung gemäß Fig. 2 ist der vordere Teil einer Fluggastbrücke oder Treppe erkennbar, wobei der vordere Teil den Balg 1 umfasst, der durch die Rahmenvorrichtung 10 mit dem Gehäuse 20 der Fluggastbrücke oder Treppe verbunden ist. Der Balg 1 überspannt den mit 30 bezeichneten Übergangsboden. Der Boden kann hierbei als Lamellenboden ausgebildet sein, um den Boden entsprechend dem Balg 1 zusammen- bzw. auseinanderschieben zu können. Wie der Balg 1 auseinander zu schieben ist, ergibt sich insbesondere in Anschauung von Fig. 9, wo ein speziell ausgebildeter Arm 2 vorgesehen ist, bestehend aus zwei Armteilen 2a und 3a, die gelenkig miteinander verbunden sind, wobei die Armteile durch Kolben-Zylinderantriebe 4a, 5a in Verbindung mit einer Seilführung 6 für die Anlage des Balges an den Flugzeugrumpf sorgen. Stirnseitig befindet sich an dem Balg 1 ein Stoßpuffer 1a, der in Fig. 2 der Übersichtlichkeit wegen weggelassen ist. Der Boden 30 ist mit dem Balg 1 nicht verbunden.

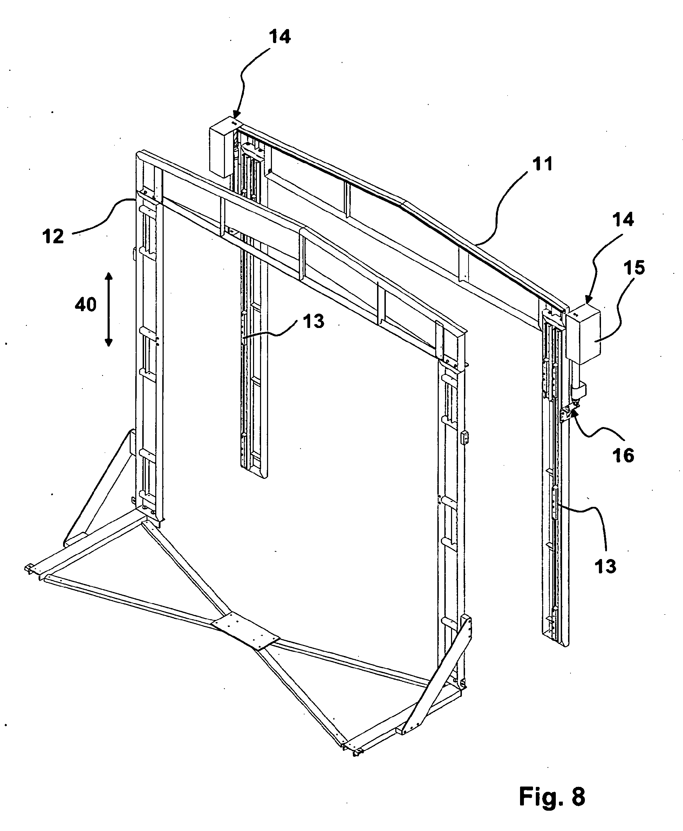

Gegenstand der Erfindung ist nun, wie der Balg 1, der -wie aus Fig. 2 erkennbar- nach unten über dem Boden 30 übersteht, in der Höhe entsprechend dem Pfeil 40 vertikal verfahrbar ist, um die lichte Öffnungsweite, gekennzeichnet durch den Pfeil 50, verändern zu können. Zur Verschiebung des Balges 1 in der Höhe relativ aus dem Gehäuse 20 der Fluggasttreppe oder -brücke ist eine sogenannte Rahmenvorrichtung 10 vorgesehen, wobei sich die Ausgestaltung der Rahmenvorrichtung 10 insbesondere in Anschauung von Fig. 8 ergibt. Figur 8 zeigt die beiden Rahmenteile 11 und 12, die durch sogenannte Rollonführungen® 13 relativ zueinander in vertikaler Richtung verschieblich sind. Zur Verschiebung der beiden Rahmenteile 11 und 12 relativ zueinander ist ein insgesamt mit 14 bezeichneter Antrieb zu beiden Seiten des Rahmenteiles 11 vorgesehen, wobei sich der Antrieb 14 als Spindelantrieb darstellt. Der Antriebsmotor 15 des Spindelantriebes 14 ist an dem Rahmenteil 11 angeordnet, wobei die Spindel endseitig einen Mitnehmer 16 zur Verbindung mit dem Rahmenteil 12 aufweist. Das heißt, dass bei Betätigung des Antriebes 14 das Rahmenteil 12 in vertikaler Richtung entsprechend dem Pfeil 40 verfahrbar ist, mithin der Balg den vertikalen Abstand zum Boden vergrößert oder verkleinert.

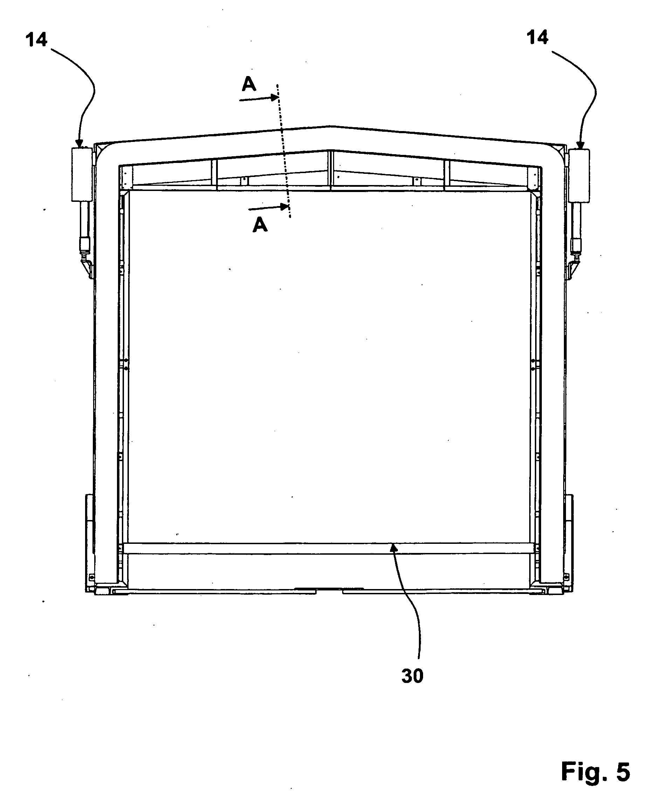

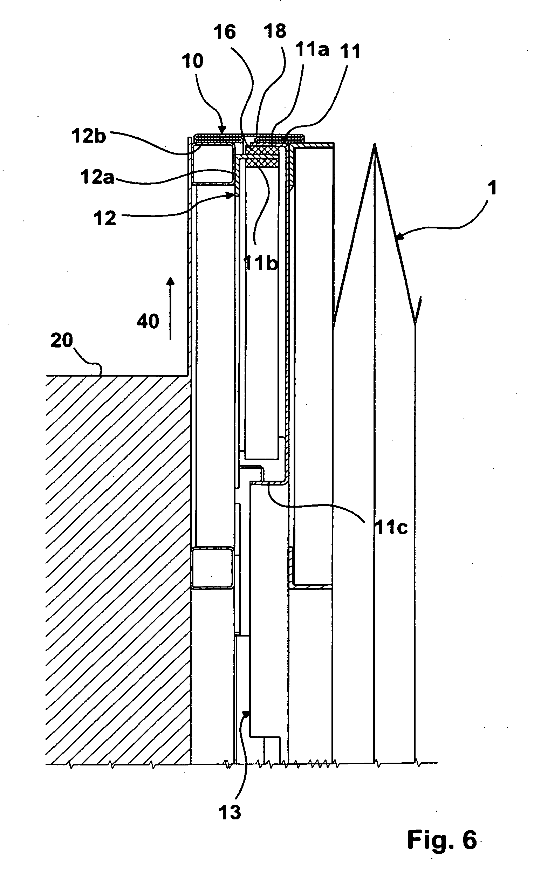

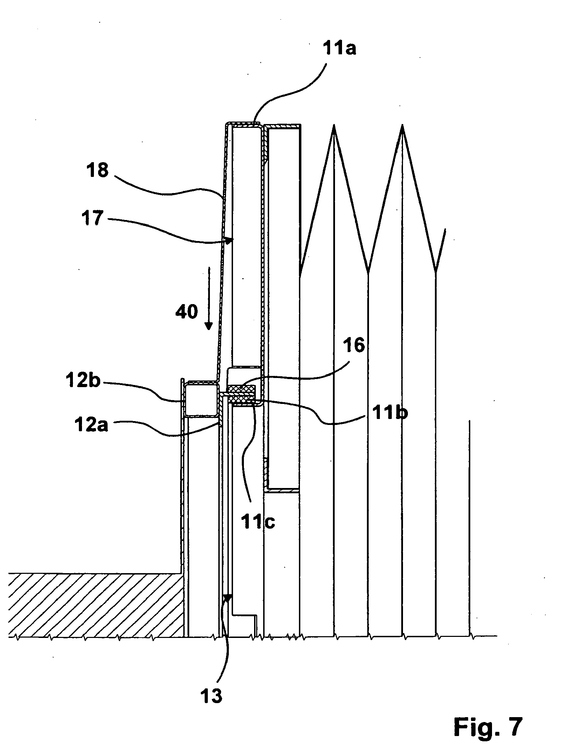

Betrachtet man nunmehr die Figuren 6 und 7 als Schnittdarstellung A-A aus Fig. 5, so erkennt man zwei Stellungen der Rahmenelemente 11 und 12 relativ zueinander. Bei der Darstellung gemäß Fig. 6 befinden sich die beiden Rahmenteile 11 und 12 in nahezu einer Ebene, d. h., die beiden Rahmenteile nehmen eine untere Endlage zueinander ein. Hierbei besitzen die beiden Rahmenteile 11 und 12 jeweils an ihrem oberen Ende einen Winkel 11a, 12a, wobei der Winkel 12a an einem Rahmenrohr 12b des Rahmenteiles 12 angeordnet ist. Zwischen dem Winkel 12a und dem Winkel 11a befindet sich eine Dichtung 16, z. B. ein Moosgummi, zur Abdichtung. Die Fig. 6 stellt - wie gesagt - die untere Endlage dar.

In der oberen Endlage gemäß Fig. 7 wird das Rahmenelement 12 in Richtung des Pfeiles 40 verschoben, wobei dann der Winkel 12a eine Stellung einnimmt, bei der dieser Winkel 12a über der Abdichtung 11b von dem anderen Schenkel 11 c des Rahmens 11 anliegt. Um nun zu verhindern, dass in den hierbei aufgespannten Freiraum 17 Feuchtigkeit eindringt, ist das Deckentuch 18 vorgesehen, dass diese Öffnung, wie sich dies insbesondere aus Fig. 7 ergibt, abdeckt. In der oberen Endlage gemäß Fig. 7 weist der Durchgang die größte lichte Höhe zwischen Oberkante-Übergangsboden und der Innenkante der Balgdecke auf.

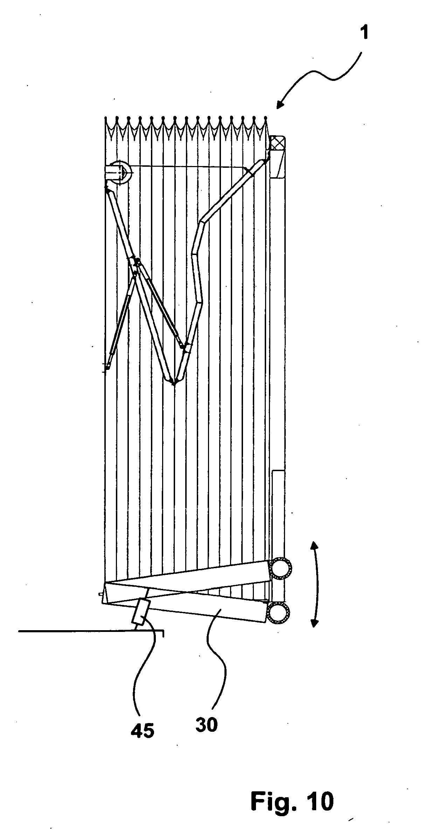

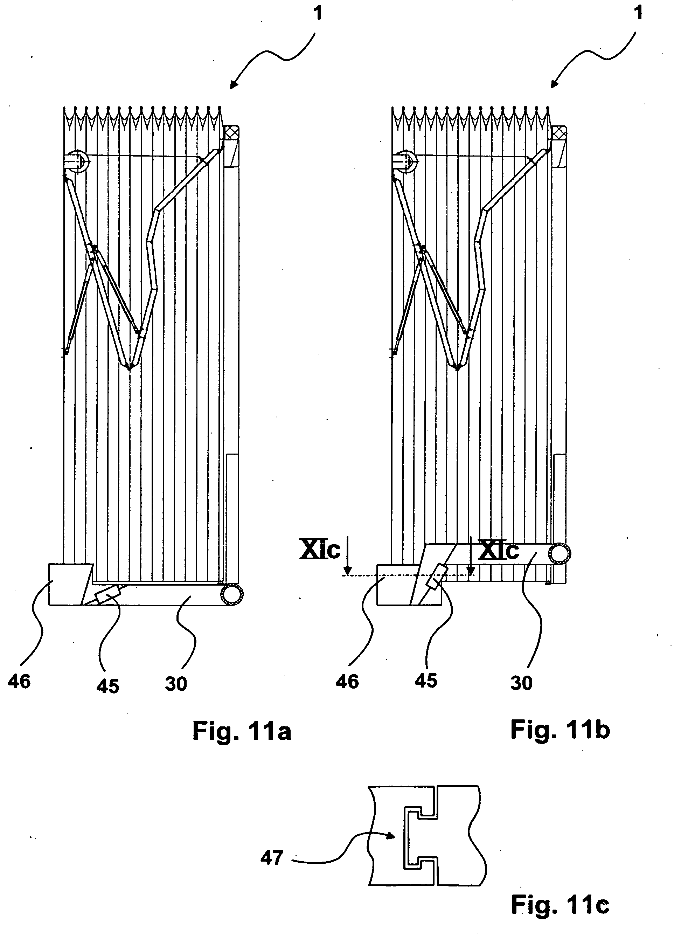

Gegenstand der Fig. 10, 11a und 11b ist die Ausbildung eines höhenverstellbaren Übergangsbodens 30, wobei der Übergangsboden 30 gemäß der Fig. 10 verschwenkbar ausgebildet ist, um unterschiedliche Höhen beim Zugang von der Fluggastbrücke in das Flugzeuginnere zu überbrücken. Zum Verschwenken des Übergangsbodens 30 kann hierbei ein Antrieb, zum Beispiel ein Kolben-Zylinderantrieb 45, vorgesehen sein. Eine andere Ausführungsform, wie sie sich aus den Fig. 11a und 11b ergibt, zeichnet sich durch einen im Wesentlichen vertikal in der Höhe verstellbaren Übergangsboden 30 aus, wobei die Verbindung des Übergangsbodens 30 zur eigentlichen Fluggastbrücke durch einen Aufnahmebalken 46 erfolgt, wobei der Übergangsboden 40 dem Balken 46 durch eine Führungsschiene (Fig. 11 c) erfolgt, die nach Art einer Schwalbenschwanzführung 47 ausgebildet ist. Zur vertikalen Verstellbarkeit des Übergangsbodens 40 ist wiederum ein Kolben-Zylinderantrieb 45 vorgesehen.

## Patentansprüche

1. Fluggastbrücke oder Fluggasttreppe mit einem Übergangsboden (30), wobei die Fluggastbrücke oder die Fluggasttreppe einen den Übergangsboden überspannenden Balg (1), insbesondere einen U-förmigen Balg aufweist,
**dadurch gekennzeichnet,**
**dass** die lichte Höhe (Pfeil 50) zwischen der Oberkante des Übergangsbodens (30) und dem Dach des Balges (1) veränderbar ist.

2. Fluggastbrücke oder Fluggasttreppe nach Anspruch 1,
**dadurch gekennzeichnet,**
**dass** die Fluggasttreppe oder die Fluggastbrücke eine Rahmenvorrichtung (10) aufweist, die den Balg (1) relativ zum Übergangsboden (30) in der Höhe verstellbar aufnimmt.

3. Fluggastbrücke oder Fluggasttreppe nach Anspruch 2,
**dadurch gekennzeichnet,**
**dass** die Rahmenvorrichtung (10) zwei relativ zueinander bewegliche Rahmenteile (11, 12) aufweist, wobei die beiden Rahmenteile (11, 12) durch Längsführungen (13) miteinander in Verbindung stehen.

4. Fluggastbrücke oder Fluggasttreppe nach einem der voranstehenden Ansprüche,
**dadurch gekennzeichnet,**
**dass** das eine Rahmenteil (11, 12) relativ zu dem anderen Rahmenteil (11, 12) durch einen motorischen Antrieb (14) verfahrbar ist.

5. Fluggastbrücke oder Fluggasttreppe nach Anspruch 4,
**dadurch gekennzeichnet,**
**dass** der motorische Antrieb als Spindelantrieb (14) ausgebildet ist.

6. Fluggastbrücke oder Fluggasttreppe nach einem der voranstehenden Ansprüche,
**dadurch gekennzeichnet,**
**dass** die beiden Rahmenteile (11,12) durch ein Deckentuch (18) verbunden sind.

7. Fluggastbrücke oder Fluggasttreppe nach Anspruch 1,
**dadurch gekennzeichnet,**
**dass** der Übergangsboden (30) in der Höhe verstellbar ist.

8. Fluggastbrücke nach Anspruch 7,
**dadurch gekennzeichnet,**
**dass** der Übergangsboden (30) verschwenkbar durch die Fluggastbrücke aufnehmbar ist.

9. Fluggastbrücke nach Anspruch 7,
**dadurch gekennzeichnet,**
**dass** der Übergangsboden (30) vertikal verschieblich durch die Fluggastbrücke aufnehmbar ist.

10. Fluggastbrücke nach einem der Ansprüche 8 und 9,
**dadurch gekennzeichnet,**
**dass** der Übergangsboden (30) mittels eines Antriebs, zum Beispiel eines Kolben-Zylinderantriebs (45), in seiner Lage veränderbar ist.

11. Fluggastbrücke nach Anspruch 9,
**dadurch gekennzeichnet,**
**dass** der Übergangsboden (30) durch einen Aufnahmebalken (46) vertikal verschieblich gehalten ist.

12. Fluggastbrücke nach Anspruch 11,
**dadurch gekennzeichnet,**
**dass** zur Verbindung des Übergangsbodens (30)mit dem Aufnahmebalken (46) eine Führung, zum Beispiel nach Art einer Schwalbenschwanzführung (47), vorgesehen ist.

## Claims

1. An aircraft boarding bridge or aircraft boarding stairs with a gangway bottom plate (30), said aircraft boarding bridge or said aircraft boarding stairs comprising a bellows (1), more specifically a U-shaped bellows, that spans said gangway bottom plate,
**characterized in**
**that** the clear height (arrow 50) between the upper edge of the gangway bottom plate (30) and the roof of the bellows (1) may be varied.

2. The aircraft boarding bridge or aircraft boarding stairs as set forth in claim 1,
**characterized in**
**that** the aircraft boarding stairs or the aircraft boarding bridge comprises a frame apparatus (10) that receives the bellows (1) for height adjustment relative to the gangway bottom plate (30).

3. The aircraft boarding bridge or aircraft boarding stairs as set forth in claim 2,
**characterized in**
**that** the frame apparatus (10) comprises two relatively movable frame parts (11, 12), said two frame parts (11, 12) being connected together through longitudinal guides (13).

4. The aircraft boarding bridge or aircraft boarding stairs as set forth in any one of the afore mentioned claims,
**characterized in**
**that** the one frame part (11, 12) is movable relative to the other frame part (11, 12) through a motor drive (14).

5. The aircraft boarding bridge or aircraft boarding stairs as set forth in claim 4,
**characterized in**
**that** the motor drive is configured to be a spindle drive (14).

6. The aircraft boarding bridge or aircraft boarding stairs as set forth in any one of the afore mentioned claims,
**characterized in**
**that** the two frame parts (11, 12) are connected together with a ceiling cloth (18).

7. The aircraft boarding bridge or aircraft boarding stairs as set forth in claim 1,
**characterized in**
**that** the gangway bottom plate (30) is height adjustable.

8. The aircraft boarding bridge or aircraft boarding stairs as set forth in claim 7,
**characterized in**
**that** the gangway bottom plate (30) is adapted to be pivotally received by the aircraft boarding bridge.

9. The aircraft boarding bridge or aircraft boarding stairs as set forth in claim 7,
**characterized in**
**that** the gangway bottom plate (30) is adapted to be received for vertical displacement by the aircraft boarding bridge.

10. The aircraft boarding bridge as set forth in any one of the claims 8 and 9,
**characterized in**
**that** the position of the gangway bottom plate (30) may be changed by means of a drive such as a piston-and-cylinder drive (45).

11. The aircraft boarding bridge or aircraft boarding stairs as set forth in claim 9,
**characterized in**
**that** the gangway bottom plate (30) is retained for vertical displacement by a receiving beam (46).

12. The aircraft boarding bridge or aircraft boarding stairs as set forth in claim 11,
**characterized in**
**that** a guide, for example a dovetail type guide (47), is provided for connecting the gangway bottom plate (30) to the receiving beam (46).

## Revendications

1. Passerelle d'embarquement ou escalier d'embarquement avec un plancher d'intercirculation (30), la passerelle d'embarquement ou l'escalier d'embarquement comportant un soufflet (1), notamment un soufflet en U, recouvrant le plancher d'intercirculation,
**caractérisé en ce**
**que** la hauteur intérieure (flèche 50) entre le bord supérieur du plancher d'intercirculation (30) et la toiture du soufflet (1) est variable.

2. Passerelle d'embarquement ou escalier d'embarquement selon la revendication 1,
**caractérisé en ce**
**que** l'escalier d'embarquement ou la passerelle d'embarquement comporte un dispositif d'encadrement (10) qui reçoit le soufflet (1) réglable en hauteur par rapport au plancher d'intercirculation (30).

3. Passerelle d'embarquement ou escalier d'embarquement selon la revendication 1,
**caractérisé en ce**
**que** le dispositif d'encadrement (10) comporte deux parties de cadre (11, 12) mobiles l'une par rapport à l'autre, les deux parties de cadre (11, 12) étant reliées ensemble par des guides longitudinaux (13).

4. Passerelle d'embarquement ou escalier d'embarquement selon l'une quelconque des revendications précédentes,
**caractérisé en ce**
**que** l'une partie de cadre (11, 12) est déplaçable par rapport à l'autre partie de cadre (11, 12) par un entraînement motorisé (14).

5. Passerelle d'embarquement ou escalier d'embarquement selon la revendication 4,
**caractérisé en ce**
**que** l'entraînement motorisé est conformé en forme d'entraînement par vis sans fin (14).

6. Passerelle d'embarquement ou escalier d'embarquement selon l'une quelconque des revendications précédentes,
**caractérisé en ce**
**que** les deux parties de cadre (11, 12) sont reliées par une toile de plafond (18).

7. Passerelle d'embarquement ou escalier d'embarquement selon la revendication 1,
**caractérisé en ce**
**que** le plancher d'intercirculation (30) est réglable en hauteur.

8. Passerelle d'embarquement ou escalier d'embarquement selon la revendication 7,
**caractérisé en ce**
**que** le plancher d'intercirculation (30) est apte à être reçu mobile en pivotement par la passerelle d'embarquement.

9. Passerelle d'embarquement ou escalier d'embarquement selon la revendication 7,
**caractérisé en ce**
**que** le plancher d'intercirculation (30) est apte à être reçu mobile en translation verticale par la passerelle d'embarquement.

10. Passerelle d'embarquement ou escalier d'embarquement selon l'une quelconque des revendications 8 et 9,
**caractérisé en ce**
**que** le plancher d'intercirculation (30) est apte à changer de position au moyen d'un entraînement, par exemple d'un entraînement cylindre-piston (45).

11. Passerelle d'embarquement ou escalier d'embarquement selon la revendication 9,
**caractérisé en ce**
**que** le plancher d'intercirculation (30) est retenu mobile en translation verticale par une poutre réceptrice (46).

12. Passerelle d'embarquement ou escalier d'embarquement selon la revendication 11,
**caractérisé en ce**
**que,** pour relier le plancher d'intercirculation (30) à la poutre réceptrice (46), il est prévu un guide, par exemple en queue d'aronde (47).
